# EUROPÄISCHE PATENTSCHRIFT

(11) **EP 3 378 111 B1**
(45) Veröffentlichungstag und Bekanntmachung des Hinweises auf die Patenterteilung: **13.05.2020**
(21) Anmeldenummer: 17752281.0
(22) Anmeldetag: 06.07.2017
(51) Int. Cl.: H01M 2/10, H01M 6/44

(54) **BATTERIEANORDNUNG**
BATTERY ARRAY
GAMME DE BATTERIE

(30) Priorität: 18.07.2016 DE 102016113177
(43) Veröffentlichungstag der Anmeldung: 26.09.2018
(73) Patentinhaber: Puls, Rainer M., 76227 Karlsruhe (DE); Puls, Oliver, 76227 Karlsruhe (DE)
(72) Erfinder: Puls, Rainer M., 76227 Karlsruhe (DE); Puls, Oliver, 76227 Karlsruhe (DE)
(74) Vertreter: Patent- und Rechtsanwälte Ullrich & Naumann
(86) Internationale Anmeldenummer: PCT/DE2017/200063
(87) Internationale Veröffentlichungsnummer: WO 2018/014918

(56) Entgegenhaltungen:
- DE-A1- 19 829 293

## Beschreibung

Die Erfindung betrifft eine Batterieanordnung mit einem Haltemodul mit darin ausgebildeten, gleichartigen Ausnehmungen zur Aufnahme von elektrischen Batteriezellen, wobei Bestandteil jeder Batteriezelle ein zylindrischer Zellengrundkörper ist, der im Bereich seiner einen Stirnseite mit einem Pluskontakt mit metallisch blanker Außenfläche, und im Bereich seiner anderen Stirnseite mit einem Minuskontakt mit metallisch blanker Außenfläche versehen ist, und mit Mitteln zum Kühlen und/oder Erwärmen des Haltemoduls.

Ein solche, besonders für Akkumulatoren für elektrische Fahrantriebe geeignete Batterieanordnung ist aus der WO 2008/156737 A1 bekannt. In einem insgesamt blockartig gestalteten Modul befindet sich eine große Anzahl identisch aufgebauter Batteriezellen, die teils in Reihe und teils elektrisch parallel geschaltet sind. Vor allem beim Einsatz für elektrische Fahrantriebe wird einer solchen Batterieanordnung eine hohe elektrische Leistung abverlangt, was zu einem entsprechenden Aufheizen der einzelnen Batteriezellen führt. Daher ist eine Kühlung erforderlich, wozu von einem Kühlfluid durchströmte Kühlrohre zwischen jeweils benachbarten Batteriereihen hindurchgeführt sind. Im unmittelbaren Bereich der Batteriezellen sind die Kühlrohre verformt, damit sich eine vergrößerte Kontaktoberfläche zwischen der Flachseite des flachen Kühlrohres und dem zylindrischen Mantel der jeweiligen Batteriezelle ergibt. Daraus resultiert ein wellenförmiger Verlauf der zwischen benachbarten Batteriereihen angeordneten Kühlrohre. Die Herstellung der wellenförmigen Rohre erfordert spezielle Verformungswerkzeuge, die in der WO 2008/156737 A1 auch beschrieben sind. Zusätzlich müssen die Rohre einzeln innerhalb des Moduls befestigt, und in ihrer Lage fixiert werden. Diese Montage ist anspruchsvoll, da sie auf die Position und die Abmessungen der einzelnen Batteriezellen abgestimmt sein muss. Dies macht zusätzliche Bauteile und Justierhilfen erforderlich. Die Montage der Kühlrohre gestaltet sich zudem dann besonders schwierig, wenn diese mäanderförmig geformt sind, indem sich längere wellenförmige Abschnitte mit U-förmigen Umlenkungen abwechseln. Schließlich ist, trotz der wellenförmigen Gestaltung der Rohre, die tatsächliche Kontaktfläche zwischen der Flachseite des Kühlrohrs und dem zylindrischen Mantel der Batteriezelle nicht sehr groß. Auf relativ großen Bereichen der Mantelflächen der Batteriezellen kommt es zu keinem unmittelbaren Wärmekontakt. Die mit der bekannten Anordnung, selbst bei optimalen Strömungsbedingungen in dem Kühlrohr, erreichbare Kühlleistung ist daher begrenzt.

Aus DE 198 29 293 A1 ist ein Batterie-Kühlsystem bekannt, wonach eine Kühleinrichtung über eine Verbindungsleitung mit dem Innenraum eines luftdichten Gehäuses strömungsverbunden ist. In dem Gehäuse sind mehrere Batteriezellen hermetisch abgedichtet untergebracht. Die einzelnen Batteriezellen sind zylindrisch mit kreisförmigem Querschnitt ausgebildet. Entsprechend besteht zwischen den Batterien ein Raum, durch den flüssiges Kühlmittel strömen kann.

Das bekannte Batterie-Kühlsystem ist jedoch in der Kühlleistung unzureichend. Außerdem ist das Gehäuse nicht geeignet, im Falle einer Explosion auch nur einer Zelle deren Wärme schnellstmöglich abzuführen. Der mechanische Schutz ist unzureichend. Es besteht die Gefahr eines "Thermal-Runaways", wonach innerhalb des Gehäuses eine Zelle nach der anderen Explodiert.

Der Erfindung liegt die Aufgabe zugrunde, eine Batterieanordnung der gattungsgemäßen Art derart auszugestalten und weiterzubilden, dass bei hinreichend guter Kühlleistung ein mechanischer Schutz im Falle einer Explosion einzelner oder mehrerer Batteriezellen gewährleistet ist.

Als technische Lösung bezüglich dieser Zielvorgabe wird vorgeschlagen, dass das Haltemodul ein von einem Wärmeträgerfluid durchströmbarer, homogener Körper aus wärmeleitendem Material wie z. B. Aluminium mit einer ersten Außenseite und einer zu dieser parallelen zweiten Außenseite ist, dass sich die Ausnehmungen jeweils durchgehend und ohne Veränderung ihres Querschnitts zwischen den Außenseiten erstrecken und nur an den Außenseiten offen sind, dass zumindest Wandabschnitte der Ausnehmungen zylindrisch sind, und dass jeder Zellengrundkörper über seien Umfang und den größten Teil seiner Länge von einem eigenen wärmeleitenden Mantel umschlossen ist und mit diesem flächig gegen die zylindrischen Wandabschnitte anliegt.

Ein solches Haltemodul ermöglicht eine hohe Kühlleistung an den Mantelflächen der Batteriezellen. Diese wird erreicht, indem das Haltemodul ein homogener, also einstückiger Körper aus einem gut wärmeleitenden Material wie z. B. Aluminium ist, der zudem von einem Kühlfluid durchströmbar und dazu in seinem Inneren mit Kühlkanälen versehen ist. Ausnehmungen zur Aufnahme der elektrischen Batteriezellen erstrecken sich zwischen einer ersten Außenseite und einer zu dieser parallelen zweiten Außenseite des homogenen Körpers. Dabei erstreckt sich jede Ausnehmung durchgehend und ohne Veränderung ihres Querschnitts zwischen den Außenseiten. Jede Ausnehmung ist also ausschließlich zu den Außenseiten hin offen, und nicht in andere Richtungen.

Für eine möglichst große Wärmeübertragungsfläche sind zumindest Wandabschnitte der Ausnehmungen zylindrisch geformt, und jeder Zellengrundkörper ist über seinen Umfang und den größten Teil seiner Länge von einem gut wärmeleitenden, eigenen Mantel z. B. aus Silikon umschlossen. Der Zellengrundkörper liegt mit diesem Mantel flächig gegen die zylindrischen Wandabschnitte an.

Von Vorteil ist zudem der geringe Fertigungs- und Montageaufwand bei der Herstellung des Haltemoduls, da Ausgangsprodukt z. B. ein Aluminiumblock sein kann, an dem die Ausnehmungen durch ausschließlich Bohr- oder Fräsprozesse hergestellt werden können. Auch eine komplette Herstellung aus Gussmetall, als stranggepresstes Modul oder in einem additiven Verfahren, d.h. in einem 3-D-Druckverfahen, ist möglich. Die einzelnen Batteriezellen werden in die so gefertigten bzw. beim Gießen gleich mit geformten Ausnehmungen in Batterielängsrichtung eingefügt, was eine insgesamt einfache und vor allem vollautomatisch durchführbare Bestückung erlaubt, bei der z. B. simultan eine Vielzahl von Batteriezellen gleichzeitig in den homogenen Aluminiumkörper eingesetzt werden.

Von besonderem Vorteil ist auch der Mantel aus gut wärmeleitendem Material, mit dem jeder Zellengrundkörper der Batteriezellen umschlossen ist. Für eine optimale Wärmeabfuhr kann dieser Mantel z. B. aus Silikon bestehen, jedoch lassen sich auch mit einem Mantel aus Polyethylen, Polypropylen oder Gummi gute Wärmeübertragungswerte und damit eine gute Wärmeabfuhr von den Batteriezellen erzielen.

Der Mantel, mit dem jede einzelne Batteriezelle versehen ist, weist vorzugsweise die Gestalt einer an beiden Enden offenen Hülse auf. Er sollte eine Länge von mindestens 75 % der Länge des Zellengrundkörpers bedecken, um so eine ausreichende Wärmeübertragungsfläche bereitzustellen.

Gemäß einer bevorzugten Ausgestaltung sind die zylindrischen Wandabschnitte der Ausnehmungen in Batterielängsrichtung jeweils kürzer, als der Zellengrundkörper der Batteriezelle. Demgemäß ist auch der Abstand zwischen den beiden Außenseiten des Haltemoduls geringer, als die Länge des Zellengrundkörpers. Dies hat den Vorteil, dass jede Batteriezelle mit ihren beiden Enden etwas aus dem homogenen Körper herausragt, was die elektrische Kontaktierung erleichtert, ohne dass nennenswerte Nachteile für die insgesamt erzielte Wärmeübertragungsfläche entstehen. Insbesondere kann bei jeder Batteriezelle deren Pluskontakt über die eine der Außenseiten, und ihr Minuskontakt über die andere der Außenseiten des Haltemoduls hinausragen.

Bei der Gestaltung der Ausnehmungen besteht die Möglichkeit, dass jede Ausnehmung nur eine einzelne Batteriezelle aufnimmt. In diesem Fall kann der Querschnitt der Ausnehmung kreiszylindrisch sein, wodurch eine Wärmeübertragung über den gesamten Umfang der Batteriezelle möglich ist.

Montagetechnisch günstiger kann eine Variante sein, bei der die Ausnehmungen vergrößert sind, indem sie einen länglichen Querschnitt aufweisen und jeweils eine Gruppe von Batteriezellen aufnehmen. Vorzugsweise sind die diese Gruppe bildenden Batteriezellen in einer geraden Reihe angeordnet.

Der längliche Querschnitt einer solchen, vergrößerten Ausnehmung setzt sich zusammen aus durch die zylindrischen Wandabschnitte gebildeten Querschnittsbereichen, in denen sich die Batteriezellen befinden, und Übergangsbereichen, wobei die Breite der Ausnehmung in den Übergangsbereichen geringer ist als in den Querschnittsbereichen.

Die Batteriezellen sind vorzugsweise in Zellreihen angeordnet. Vorzugsweise sind die Batteriezellen in mehreren zueinander parallelen Zellreihen angeordnet, wobei die Batteriezellen in unmittelbar benachbarten Zellreihen wechselseitig versetzt zueinander angeordnet sind.

Für einen geringen Aufwand bei der Herstellung und Montage der elektrischen Kontaktierungsmittel ist es von Vorteil, wenn alle Batteriezellen einer Zellreihe dieselbe Polarität aufweisen. In diesem Fall besteht auch die dieser Zellreihe benachbarte Zellreihe aus Batteriezellen mit einheitlicher Polarität, wobei allerdings in unmittelbar benachbarten Zellreihen die Polung der darin zusammengefassten Batteriezellen entgegengesetzt ist.

Im Hinblick auf die elektrische Kontaktierung der Batteriezellen ist eine Bauweise von Vorteil, bei der eine Mehrzahl von Batteriezellen elektrisch in Reihe geschaltet ist und sich die Reihe rechtwinklig zu dem länglichen Querschnitt der Ausnehmungen erstreckt.

Eine weitere Ausgestaltung ist gekennzeichnet durch eine Anordnung der Batteriezellen in mindestens zwei Batteriegruppen, wobei die Batteriegruppen durch den in dem Haltemodul ausgebildeten Kühlkanal voneinander getrennt sind, der durch ein Kühlfluid durchströmbar ist. Vorzugsweise erstreckt sich der Kühlkanal quer zur Richtung der Zellreihen.

Weitere Vorteile und Einzelheiten der Batterieanordnung werden nachfolgend anhand der Zeichnungen erläutert. Darin zeigen:
- Fig. 1: eine Draufsicht auf eine Batterieanordnung bestehend aus einem blockförmigen Haltemodul und darin angeordneten Batteriezellen, wobei nur für einzelne der Batteriezellen deren elektrische Kontaktierung dargestellt ist;
- Fig. 2: eine perspektivische Darstellung der Batterieanordnung, wobei ein Teilbereich als Ausbruch wiedergegeben ist;
- Fig. 3a: eine von einem wärmeleitenden Mantel umschlossene, wiederaufladbare Batteriezelle;
- Fig. 3b: die Batteriezelle nach Fig. 3a, wobei aus Gründen der Erläuterung ein Teil des Mantels weggelassen ist;
- Fig. 4: in einer perspektivischen Darstellung ausschließlich das blockförmige Haltemodul;
- Fig. 5: der Bereich V der Fig. 4 in vergrößertem Maßstab;
- Fig. 6: eine Draufsicht auf das Haltemodul, und
- Fig. 7: den Bereich VII der Fig. 6 in vergrößertem Maßstab.

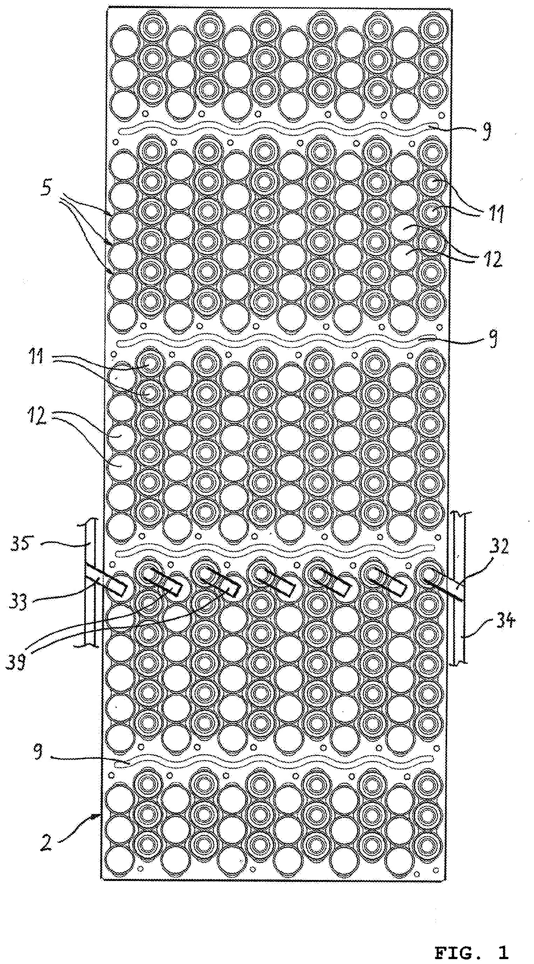

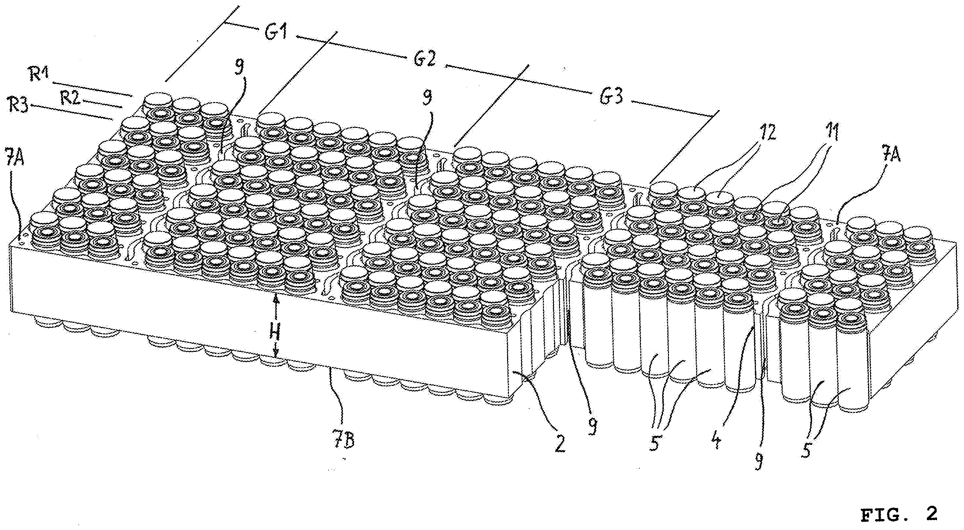

Die Batterieanordnung nach den Figuren 1 und 2 findet Anwendung z. B. als Akkumulator eines Fahrzeugs mit einem leistungsfähigen elektrischen Fahrantrieb. Jedoch sind auch andere Einsatzgebiete möglich, bei denen eine hohe Akku- bzw. Batterieleistung gefordert ist. Wenn im Folgenden von Batteriezellen die Rede ist, sind damit stets wiederaufladbare Batterien gemeint, auch als Akku bezeichnet.

Grundbestandteil der Batterieanordnung ist ein insgesamt blockartig gestaltetes Haltemodul 2. Das Haltemodul 2 ist ein homogener, einstückiger Körper aus einem Metall, welches elektrisch leitfähig sein kann, und welches sich vor allem durch eine gute Wärmeleitung auszeichnet. Besonders geeignet als Haltemodul ist z. B. ein Aluminiumblock. In dem Block befinden sich Kühlkanäle 9, welche von einem Wärmeträgerfluid durchströmbar sind, um so den Block entweder zu kühlen oder, bei niedrigen Außentemperaturen, den Block zu erwärmen und so die Batterien zunächst auf Arbeitstemperatur zu bringen. Das Wärmeträgerfluid kann z. B. Wasser sein, oder ein geeignetes Öl.

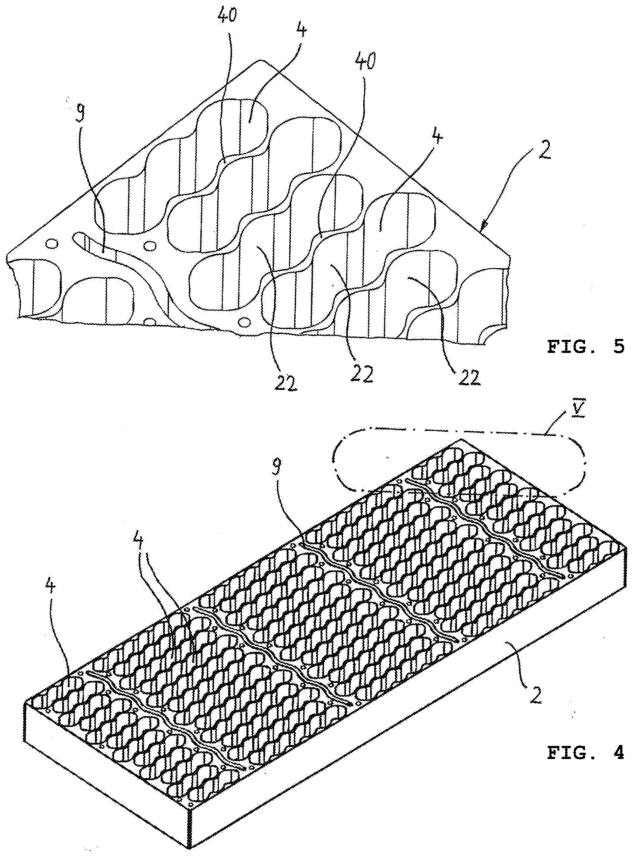

Das Haltemodul 2 ist zwecks Bestückung mit elektrischen Batteriezellen 5 mit einer Vielzahl gleichartiger Ausnehmungen 4 versehen. Die Ausnehmungen 4, deren Gestalt vor allem aus den Figuren 4 - 7 gut erkennbar ist, werden zum Beispiel durch Bohr- oder Fräsprozesse in den Metallblock eingebracht. Mit derselben Technik lassen sich auch die Kühlkanäle 9 herstellen. Das Haltemodul 2 ist hier als ein rechteckiger Quader gestaltet, dessen Länge größer als seine Breite ist, jedoch sind je nach Einsatzzweck und -ort auch andere Geometrien möglich.

Die in Fig. 2 bezeichnete Höhe H des Haltemoduls 2 ist geringer, als seine Länge und seine Breite. Die Höhe H bezeichnet zugleich den Abstand zwischen einer ersten Außenseite 7A, und einer zu dieser parallelen zweiten Außenseite 7B des Haltemoduls 2. Die Längsachsen der zylindrisch gestalteten Batteriezellen 5 erstrecken sich senkrecht zu den beiden Außenseiten 7A, 7B. Wie vor allem die Fig. 4 und, in vergrößertem Maßstab, Fig. 5 erkennen lassen, erstrecken sich die Ausnehmungen 4 jeweils durchgehend und ohne Veränderung ihres Querschnitts zwischen den beiden Außenseiten 7A, 7B des homogenen Körpers. Jede 5 Ausnehmung 4 ist also nur zu diesen Außenseiten 7A, 7B hin offen, und nicht z. B. quer dazu.

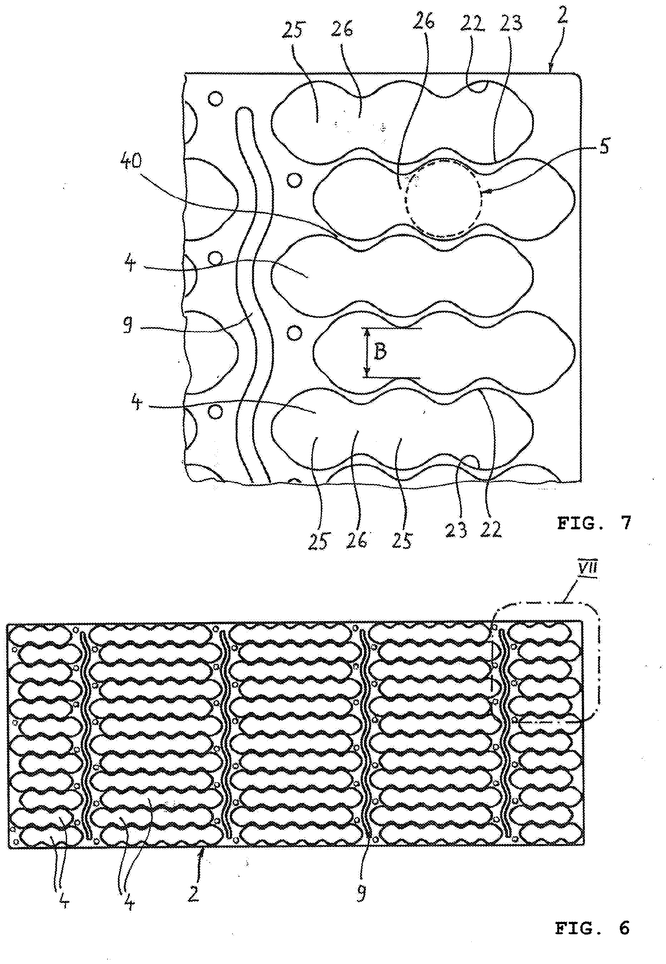

Der Querschnitt der Ausnehmungen 4 ist so gestaltet, dass zumindest Wandabschnitte 22, 23 der Ausnehmungen teilzylindrisch sind, und in diesem teilzylindrischen Querschnitt eine zylindrische Batteriezelle 5 angeordnet ist. Hierzu ist in der Fig. 7 in einer der Ausnehmungen 4 eine Batteriezelle 5 gestrichelt wiedergegeben. Zu erkennen ist, dass sich die zylindrischen Wandabschnitte 22, 23 über einen großen Teil des Umfangs der Batteriezelle 5 erstrecken, und auf den Wandabschnitten 22, 23 ein unmittelbarer, flächiger Kontakt und damit ein Bereich intensiver Wärmeübertragung zwischen Batteriezelle 5 und der Wandung der Ausnehmung 4 besteht.

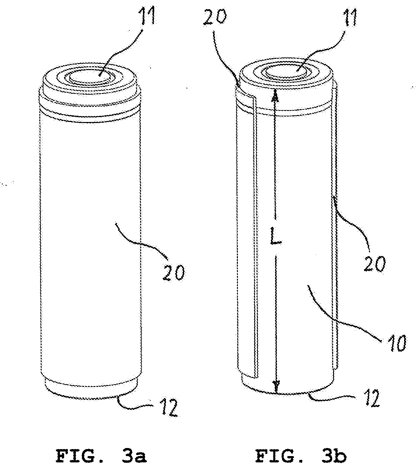

Dieser Kontakt wird noch dadurch verbessert, dass gemäß den Figuren 3a und 3b der Zellengrundkörper 10 jeder Batteriezelle 5, dessen zylindrische Außenseite zugleich Teil des Minuskontakts 12 ist, von einem elektrisch isolierenden, aber besonders gut wärmeleitenden Mantel 20 umschlossen ist. Der Zellengrundkörper 10 liegt mit diesem Mantel 20 flächig gegen die zylindrischen Wandabschnitte 22, 23 der Ausnehmung 4 an.

Der in Fig. 3a vollständig und in Fig. 3b teilweise entfernt wiedergegebene Mantel 20 weist die Gestalt einer an beiden Enden offenen Hülse auf. Er besteht vorzugsweise aus Silikon, da sich Silikon durch einen hohen Wärmeleitungskoeffizienten auszeichnet. Aber auch Polyethylen, Polypropylen oder Gummi sind als Material für den Mantel 20 geeignet.

Sofern die Batteriezellen 5 vor ihrer Verwendung in der erfindungsgemäßen Batterieanordnung über einen den Zellengrundkörper 10 umschließenden Schutzmantel ohne elektrische Funktion verfügen, kann dieser Schutzmantel zunächst entfernt, und durch den Mantel 20 aus z. B. Silikon ersetzt werden.

Der Mantel 20 sollte mindestens 75 % der Länge L des Zellengrundkörpers 10 bedecken.

Die eher zentral angeordneten Ausnehmungen in dem Haltemodul 2 sind von solcher Länge, dass diese Ausnehmungen eine größere Zahl Batteriezellen 5 aufnehmen, im Ausführungsbeispiel sechs Batteriezellen. Die an den Längsenden des Moduls 2 angeordneten Ausnehmungen 4 sind von solcher Länge, dass diese Ausnehmungen nur eine geringere Zahl und vorzugsweise nur die Hälfte an Batteriezellen 5 aufnehmen, beim Ausführungsbeispiel also drei Batteriezellen.

Damit jede Ausnehmung 4 mehr als nur eine Batteriezelle aufnehmen kann, setzt sich der Querschnitt der Ausnehmung 4 zusammen aus durch die zylindrischen Wandabschnitte 22, 23 gebildeten Querschnittsabschnitten 25, in denen sich die Batteriezellen befinden, und dazwischen angeordneten Übergangsbereichen 26, wobei die Breite B der Ausnehmung 4 in den Übergangsbereichen 26 geringer ist, als in den Querschnittsbereichen 25. Auf diese 10 Weise nimmt jede Ausnehmung 4 eine Gruppe von Batteriezellen 5 auf, wobei die Batteriezellen 5 der Gruppe eine Reihe bilden.

Alternativ ist es auch möglich, für jede einzelne Batteriezelle 5 eine eigene, zylindrische Ausnehmung in dem Haltemodul anzuordnen. In diesem Fall wird die überschüssige Wärme der Batteriezelle bestmöglich an das voll umschließende Metall des Haltemoduls abgeführt. Umgekehrt wird beim Erwärmen des Haltemoduls diese Wärme gut auf die Batteriezelle 5 übertragen, um diese, zum Beispiel bei tiefen Anfangstemperaturen, zunächst auf die für die Batteriezelle optimale Betriebstemperatur zu bringen. Allerdings ist das Einfügen der Batteriezelle in eine zylindrische und insoweit knapp geschnittene Öffnung schwieriger als bei dem illustrierten Konzept, bei dem jede Ausnehmung 4 von länglichem Querschnitt ist und zugleich mehrere Batteriezellen 5 aufnimmt.

Die Fluidkanäle 9, welche je nach Betriebssituation als Kühlkanäle oder als Erwärmungskanäle dienen, verlaufen quer zur Längserstreckung der Ausnehmungen 4, und damit auch quer zu den Zellreihen R1, R2, R3, in denen die Batteriezellen 5 angeordnet sind.

Zwischen dem Fluidkanal 9 und den nahegelegenen Enden der Ausnehmungen 4 sollte, für eine bestmögliche Wärmeabführung, nur ein dünne Trennwand bestehen, weshalb bei dem hier beschriebenen Ausführungsbeispiel diese Kühlkanäle 9 wellenförmig verlaufen. Zu verhindern ist, dass Kühlfluid aus den Kühlkanälen 9 in die Ausnehmungen 4 mit den Batteriezellen gelangen kann.

Die Batteriezellen 5 in unmittelbar benachbarten Zellreihen R1 und R2 bzw. R2 und R3 sind wechselseitig versetzt zueinander in dem Haltemodul 2 angeordnet. Die Wände 40 zwischen benachbarten Ausnehmungen 4 weisen dadurch einen wellenförmigen Verlauf auf. Diese Anordnung der Ausnehmungen ermöglicht eine große Packungsdichte der Batteriezellen und damit auch ein besonders kompaktes Haltemodul 2.

Alle Batteriezellen 5, die in einer gemeinsamen Ausnehmung 4 angeordnet sind, weisen dieselbe Polarität, also dieselbe Ausrichtung ihrer elektrischen Kontakte 11, 12 auf. Zusätzlich weisen sämtliche Batteriezellen einer Zellreihe R1, R2, R3 dieselbe Polarität auf. Hingegen ist in der jeweils unmittelbar benachbarten Zellreihe die Polarität der darin zusammengefassten Batteriezellen entgegengesetzt. Es wechseln sich also, in Richtung des Verlaufs der Kühlkanäle 9 betrachtet, jeweils Zellreihen, deren Batterien eine erste Polarität aufweisen, mit Zellreihen ab, deren Batterien die umgekehrte Polarität aufweisen. Dies lässt anschaulich die Fig. 1 erkennen, in der die Pluskontakte 11 und die Minuskontakte 12 einzelner Batteriezellen 5 bezeichnet sind.

Die Batterieanordnung weist entlang der einen Längsseite des Haltemoduls 2 einen gemeinsamen Plusleiter 34, und entlang der anderen Längsseite einem gemeinsamen Minusleiter 35 auf. Von dem Plusleiter 34 führt ein elektrischer Anschluss 32 zu dem Pluskontakt 11 der Batteriezelle in der dem Plusleiter 34 unmittelbar benachbarten Zellreihe. Entsprechend führt von dem gemeinsamen Minusleiter 35 ein Anschluss 33 zu dem Minuskontakt 12 der Batteriezelle in der dem Minusleiter 35 unmittelbar benachbarten Zellreihe. Kontaktelemente 39 überbrücken jeweils den Pluskontakt 11 der Batteriezelle einer Zellreihe mit dem Minuskontakt 12 der Batteriezelle der benachbarten Zellreihe. Die über die Breite des Haltemoduls 2 aufeinanderfolgenden Batteriezellen, beim Ausführungsbeispiel sind dies zwölf Batteriezellen, sind daher elektrisch in Reihe geschaltet. Diese elektrische Reihenschaltung erstreckt sich quer zu den Ausnehmungen 4 und zu den Zellreihen R1, R2, R3. Bei dieser Art der elektrischen Kontaktierung ist also eine Mehrzahl von Batteriezellen elektrisch in Reihe geschaltet, und diese Reihe erstreckt sich rechtwinklig zu der Erstreckung des länglichen Querschnitts der Ausnehmungen 4.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 2: Haltemodul
- 4: Ausnehmung
- 5: Batteriezelle
- 7A: erste Außenseite
- 7B: zweite Außenseite
- 9: Fluidkanal, Kühlkanal
- 10: Zellengrundkörper
- 11: Pluskontakt
- 12: Minuskontakt
- 20: Mantel
- 22: Wandabschnitt
- 23: Wandabschnitt
- 25: Querschnittsbereich
- 26: Übergangsbereich
- 32: Anschluss
- 33: Anschluss
- 34: gemeinsamer Plusleiter
- 35: gemeinsamer Minusleiter
- 39: Kontaktelement
- 40: Wand

- B: Breite
- R1: Zellreihe
- R2: Zellreihe
- R3: Zellreihe
- G1: Batteriegruppe
- G2: Batteriegruppe
- G3: Batteriegruppe
- H: Höhe
- L: Länge

## Patentansprüche

1. Batterieanordnung mit einem Haltemodul (2) mit darin ausgebildeten, gleichartigen Ausnehmungen (4) zur Aufnahme von elektrischen Batteriezellen (5), wobei Bestandteil jeder Batteriezelle (5) ein zylindrischer Zellengrundkörper (10) ist, der im Bereich seiner einen Stirnseite mit einem Pluskontakt (11) mit metallisch blanker Außenfläche, und im Bereich seiner anderen Stirnseite mit einem Minuskontakt (12) mit metallisch blanker Außenfläche versehen ist, und mit Mitteln zum Kühlen und/oder Erwärmen des Haltemoduls (2),
**dadurch gekennzeichnet, dass** das Haltemodul (2) ein von einem Wärmeträgerfluid durchströmbarer, homogener Körper aus wärmeleitendem Material wie z. B. Aluminium mit einer ersten Außenseite (7A) und einer zu dieser parallelen zweiten Außenseite (7B) ist, dass sich die Ausnehmungen (4) jeweils durchgehend und ohne Veränderung ihres Querschnitts zwischen den Außenseiten (7A, 7B) erstrecken und nur an den Außenseiten (7A, 7B) offen sind, dass zumindest Wandabschnitte (22, 23) der Ausnehmungen (4) zylindrisch sind, und dass jeder Zellengrundkörper (10) über seinen Umfang und den größten Teil seiner Länge von einem eigenen wärmeleitenden Mantel (20) umschlossen ist und mit diesem flächig gegen die zylindrischen Wandabschnitte (22, 23) anliegt.

2. Batterieanordnung nach Anspruch 1, **dadurch gekennzeichnet, dass** der Mantel (20) aus einem der Materialien Silikon, Polyethylen, Polypropylen oder Gummi besteht.

3. Batterieanordnung nach Anspruch 1 oder 2, **dadurch gekennzeichnet, dass** der Mantel (20) die Gestalt einer an beiden Enden offenen Hülse aufweist.

4. Batterieanordnung nach einem der Ansprüche 1 bis 3, **dadurch gekennzeichnet, dass** der Mantel (20) mindestens 75% der Länge (L) des Zellengrundkörpers (10) bedeckt.

5. Batterieanordnung nach einem der Ansprüche 1 bis 4, **dadurch gekennzeichnet, dass** die Wandabschnitte (22, 23) in Batterielängsrichtung jeweils kürzer sind als der Zellengrundkörper (10).

6. Batterieanordnung nach einem der Ansprüche 1 bis 5, **dadurch gekennzeichnet, dass** bei jeder Batteriezelle (5) deren Pluskontakt (11) über eine der Außenseiten (7A, 7B), und der Minuskontakt (12) über die andere der Außenseiten (7A, 7B) des Haltemoduls (2) hinaus ragt.

7. Batterieanordnung nach einem der Ansprüche 1 bis 6, **dadurch gekennzeichnet, dass** die Ausnehmungen jeweils eine einzelne Batteriezelle (5) aufnehmen, wobei der Querschnitt der Ausnehmung kreiszylindrisch sein kann.

8. Batterieanordnung nach einem der Ansprüche 1 bis 7, **dadurch gekennzeichnet, dass** die Ausnehmungen (4) einen länglichen Querschnitt aufweisen, und jeweils eine Gruppe von Batteriezellen (5) aufnehmen.

9. Batterieanordnung nach Anspruch 8, **dadurch gekennzeichnet, dass** die die Gruppe bildenden Batteriezellen (5) in einer Reihe angeordnet sind, und dass sich der Querschnitt der Ausnehmung (4) zusammensetzt aus durch die zylindrischen Wandabschnitte (22, 23) gebildeten Querschnittsbereichen (25), in denen sich die Batteriezellen (5) befinden, und Übergangsbereichen (26), wobei die Breite (B) der Ausnehmung (4) in den Übergangsbereichen (26) geringer ist als in den Querschnittsbereichen (25).

10. Batterieanordnung nach einem der Ansprüche 1 bis 9, **dadurch gekennzeichnet, dass** die Batteriezellen (5) in Zellreihen (R1, R2, R3, ...) angeordnet sind, wobei die Batteriezellen (5) in mehreren zueinander parallelen Zellreihen (R1, R2, R3, ...) angeordnet sein können, und die Batteriezellen (5) in unmittelbar benachbarten Zellreihen wechselseitig versetzt zueinander in dem Haltemodul (2) angeordnet sein können.

11. Batterieanordnung nach Anspruch 10, **dadurch gekennzeichnet, dass** alle Batteriezellen (5) einer Zellreihe dieselbe Polarität aufweisen, wobei auch die der Zellreihe benachbarte Zellreihe aus Batteriezellen (5) mit einheitlicher Polarität bestehen kann.

12. Batterieanordnung nach Anspruch 10 bis 11, **dadurch gekennzeichnet, dass** in unmittelbar benachbarten Zellreihen die Polarität der darin zusammengefassten Batteriezellen (5) entgegengesetzt ist.

13. Batterieanordnung nach einem der Ansprüche 10 bis 12, **dadurch gekennzeichnet, dass** eine Mehrzahl von Batteriezellen (5) elektrisch in Reihe geschaltet ist und sich die Reihe rechtwinklig zu dem länglichen Querschnitt der Ausnehmungen (4) erstreckt.

14. Batterieanordnung nach einem der Ansprüche 1 bis 13, **gekennzeichnet durch** eine Anordnung der Batteriezellen (5) in mindestens zwei Batteriegruppen (G1, G2, G3), wobei die Batteriegruppen durch einen in dem Haltemodul (2) ausgebildeten Kühlkanal (9) voneinander getrennt sind, der von einem Kühlfluid durchströmbar ist.

15. Batterieanordnung nach einem der Ansprüche 10 bis 14, **dadurch gekennzeichnet, dass** sich der Kühlkanal (9) quer zu den Zellreihen (R1, R2, R3) erstreckt.

## Claims

1. Battery arrangement having a retention module (2) with identical recesses (4) which are formed therein for receiving electrical battery cells (5), wherein a component of each battery cell (5) is a cylindrical cell base member (10) which is provided in the region of one end side thereof with a plus contact (11) having a metallically bright outer face and in the region of the other end side thereof with a minus contact (12) having a metallically bright outer face, and having means for cooling and/or heating the retention module (2),
**characterised in that** the retention module (2) is a homogeneous member through which a heat-transfer fluid can flow and which comprises heat-conductive material, such as, for example, aluminium, having a first outer side (7A) and a second outer side (7B) which is parallel therewith, **in that** the recesses (4) extend in each case continuously and without changing the cross-section thereof between the outer sides (7A, 7B) and are open only at the outer sides (7A, 7B), **in that** at least wall portions (22, 23) of the recesses (4) are cylindrical, and **in that** each cell base member (10) is surrounded over the periphery thereof and the majority of the length thereof by an individual heat-conducting cover (20), and is in planar abutment therewith against the cylindrical wall portions (22, 23).

2. Battery arrangement according to claim 1, **characterised in that** the cover (20) comprises one of the materials silicone, polyethylene, polypropylene or rubber.

3. Battery arrangement according to claim 1 or claim 2, **characterised in that** the cover (20) is in the form of a sleeve which is open at both ends.

4. Battery arrangement according to any one of claims 1 to 3, **characterised in that** the cover (20) covers at least 75% of the length (L) of the cell base member (10).

5. Battery arrangement according to any one of claims 1 to 4, **characterised in that** the wall portions (22, 23) are shorter in the battery longitudinal direction than the cell base member (10).

6. Battery arrangement according to any one of claims 1 to 5, **characterised in that** in each battery cell (5) the plus contact (11) thereof protrudes beyond one of the outer sides (7A, 7B) and the minus contact (12) protrudes beyond the other of the outer sides (7A, 7B) of the retention module (2).

7. Battery arrangement according to any one of claims 1 to 6, **characterised in that** the recesses each receive a single battery cell (5), wherein the cross-section of the recess may be circular-cylindrical.

8. Battery arrangement according to any one of claims 1 to 7, **characterised in that** the recesses (4) have an elongate cross-section and each receive a group of battery cells (5).

9. Battery arrangement according to claim 8, **characterised in that** the battery cells (5) which form the group are arranged in a row and **in that** the cross-section of the recess (4) is composed of cross-sectional regions (25) which are formed by the cylindrical wall portions (22, 23) and in which the battery cells (5) are located, and transition regions (26), wherein the width (B) of the recess (4) in the transition regions (26) is smaller than in the cross-sectional regions (25).

10. Battery arrangement according to any one of claims 1 to 9, **characterised in that** the battery cells (5) are arranged in cell rows (R1, R2, R3,...), wherein the battery cells (5) may be arranged in several cell rows (R1, R2, R3,...) which are parallel with each other, and the battery cells (5) may be arranged so as to be alternately offset from each other in directly adjacent cell rows in the retention module (2).

11. Battery arrangement according to claim 10, **characterised in that** all the battery cells (5) of a cell row have the same polarity, wherein the cell row adjacent to the cell row may also comprise battery cells (5) with a uniform polarity.

12. Battery arrangement according to claim 10 to 11, **characterised in that**, in directly adjacent cell rows, the polarity of the battery cells (5) which are combined therein is opposed.

13. Battery arrangement according to any one of claims 10 to 12, **characterised in that** a plurality of battery cells (5) are connected electrically in series and the series extends at right-angles relative to the elongate cross-section of the recesses (4).

14. Battery arrangement according to any one of claims 1 to 13, **characterised by** an arrangement of the battery cells (5) in at least two battery groups (G1, G2, G3), wherein the battery groups are separated from each other by means of a cooling channel (9) which is formed in the retention module (2) and through which a cooling fluid can flow.

15. Battery arrangement according to any one of claims 10 to 14, **characterised in that** the cooling channel (9) extends transversely relative to the cell rows (R1, R2, R3).

## Revendications

1. Gamme de batterie, avec un module de retenue (2) avec des creux (4) similaires qui y sont constitués intérieurement et qui sont destinés à recevoir des éléments de batterie (5) électriques, un corps de base d'élément (10) cylindrique faisant partie intégrante de chaque élément de batterie (5) et étant, dans la zone d'un côté frontal, muni d'un contact positif (11) avec une surface extérieure métallique nue et, dans la zone de son autre côté frontal, muni d'un contact négatif (12) avec une surface extérieure métallique nue, et avec des moyens pour refroidir et/ou chauffer le module de retenue (2),
**caractérisée en ce que** le module de retenue (2) est un corps homogène, pouvant être parcouru par un fluide caloporteur, en matériau conducteur de la chaleur comme par exemple de l'aluminium, avec un premier côté extérieur (7A) et un deuxième côté extérieur (7B) parallèle à celui-ci, **en ce que** les creux (4) s'étendent respectivement entre les côtés extérieurs (7A, 7B) de façon continue et sans variation de leur section transversale et ne sont ouverts qu'au niveau des côtés extérieurs (7A, 7B), **en ce qu'**au moins des tronçons de paroi (22, 23) des creux (4) sont cylindriques, et **en ce que** chaque corps de base d'élément (10) est, sur sa périphérie et sur la majeure partie de sa longueur, entouré d'une propre enveloppe (20) conduisant la chaleur et est, par cette enveloppe, adjacent sur toute sa surface aux tronçons de paroi (22, 23).

2. Gamme de batterie selon la revendication 1, **caractérisée en ce que** l'enveloppe (20) se compose de l'un des matériaux parmi le silicone, le polyéthylène, le polypropylène ou le caoutchouc.

3. Gamme de batterie selon la revendication 1 ou 2, **caractérisée en ce que** l'enveloppe (20) présente la forme d'un manchon ouvert aux deux extrémités.

4. Gamme de batterie selon l'une des revendications 1 à 3, **caractérisée en ce que** l'enveloppe (20) couvre au moins 75 % de la longueur (L) du corps de base d'élément (10).

5. Gamme de batterie selon l'une des revendications 1 à 4, **caractérisée en ce que**, dans la direction longitudinale de batterie, les tronçons de paroi (22, 23) sont respectivement plus courts que le corps de base d'élément (10).

6. Gamme de batterie selon l'une des revendications 1 à 5, **caractérisée en ce que**, pour chaque élément de batterie (5), le contact positif (11) de celui-ci dépasse de l'un des côtés extérieurs (7A, 7B), et le contact négatif (12) dépasse de l'autre des côtés extérieurs (7A, 7B) du module de retenue (2).

7. Gamme de batterie selon l'une des revendications 1 à 6, **caractérisée en ce que** les creux reçoivent respectivement un élément de batterie (5) individuel, la section transversale du creux pouvant avoir la forme d'un cylindre circulaire.

8. Gamme de batterie selon l'une des revendications 1 à 7, **caractérisée en ce que** les creux (4) comportent une section transversale de forme allongée et reçoivent respectivement un groupe d'éléments de batterie (5).

9. Gamme de batterie selon la revendication 8, **caractérisé en ce que** les éléments de batterie (5) formant le groupe sont disposés en une rangée, et **en ce que** la section transversale du creux (4) se compose de zones de section transversale (25), formées par les tronçons de paroi (22, 23) cylindriques, dans lesquelles se trouvent les éléments de batterie (5), et de zones de transition (26), la largeur (B) du creux (4) étant plus faible dans les zones de transition (26) que dans les zones de section transversale (25).

10. Gamme de batterie selon l'une des revendications 1 à 9, **caractérisée en ce que** les éléments de batterie (5) sont disposés en rangées d'éléments (R1, R2, R3, ...), les éléments de batterie (5) pouvant être disposés en plusieurs rangées d'éléments (R1, R2, R3, ...) parallèles entre elles, et les éléments de batterie (5) pouvant, dans le module de retenue (2), être disposés en rangées d'éléments directement voisines alternativement de façon décalée les uns par rapport aux autres.

11. Gamme de batterie selon la revendication 10, **caractérisée en ce que** tous les éléments de batterie (5) d'une rangée d'éléments présentent la même polarité, la rangée d'éléments voisine de la rangée d'éléments pouvant également se composer d'éléments de batterie (5) de polarité uniforme.

12. Gamme de batterie selon les revendications 10 à 11, **caractérisée en ce que**, dans des rangées d'éléments directement voisines, la polarité des éléments de batterie (5) qui y sont rassemblés intérieurement est opposée.

13. Gamme de batterie selon l'une des revendications 10 à 12, **caractérisée en ce qu'**une pluralité d'éléments de batterie (5) sont montés électriquement en série et **en ce que** la rangée s'étend à angle droit par rapport à la section transversale de forme allongée des creux (4).

14. Gamme de batterie selon l'une des revendications 1 à 13, **caractérisée par** un agencement des éléments de batterie (5) en au moins deux groupes de batteries (G1, G2, G3), les groupes de batteries étant séparés les uns des autres par un canal de refroidissement (9) qui est constitué dans le module de retenue (2) et qui peut être parcouru par un fluide de refroidissement.

15. Gamme de batterie selon l'une des revendications 10 à 14, **caractérisée en ce que** le canal de refroidissement (9) s'étend transversalement aux rangées d'éléments (R1, R2, R3).
